# EUROPEAN PATENT APPLICATION

(11) **EP 4 245 697 A1**
(43) Date of publication of application: **20.09.2023**
(21) Application number: 22162330.9
(22) Date of filing: 15.03.2022
(51) Int. Cl.: B65G 1/06, G06Q 10/08, B65G 1/04

(54) **SHUTTLE FOR USE IN A THREE-DIMENSIONAL WAREHOUSE SYSTEM**

(71) Applicant: VOLUME Lagersysteme GmbH, 01097 Dresden (DE)
(72) Inventor: Voloskov, Mikhail, 64500 Saint Jean de Luz (FR); Preußer, Martin, 01445 Radebeul (DE)
(74) Representative: Laqua, Bernd Christian Kurt

(57) **Abstract**

The present disclosure relates to a shuttle (200) for retrieving goods in a warehouse system comprising an at least two-dimensional arrangement of storage spaces. The shuttle (200) comprises rollers (250) engageable in rails extending at a top of at least one lane of storage spaces, a vertical frame (210), a gripping arm (240, 242) coupled to a portion of the frame (210) arranged below at least one of the rollers (250), and a lifting device (230) arranged at the portion of the frame (210) for lifting the gripping arm (240, 242) and the goods. Further disclosed is a warehouse system comprising at least one such shuttle (200).

## Description

The present disclosure generally relates to the field of warehouses. More particularly, the present disclosure relates to a shuttle for retrieving goods in a warehouse system comprising an at least two-dimensional arrangement of storage spaces, and further relates to a warehouse system comprising such a shuttle.

In the industry, warehouses are used to store large amounts of goods in an organized manner. Warehouse systems typically employed nowadays encompass a variety of types of storage systems ranging from simple pallet racks, allowing the storage of palletized goods in horizontal rows with multiple levels, to high bay warehouses, allowing the storage of goods in heights of up to 50 meters, for example. Stacker cranes movable in lanes between two opposing rack fronts are typically employed to supply the racks with goods. The space necessary for these lanes is generally lost for the storage of goods, however, and, therefore, these types of systems do not provide an optimal usage of space available in a warehouse.

Compact warehouse systems are another type of storage systems which focus on the efficient use of available space in a warehouse. One example of compact warehouse systems are automated channel storage systems in which multiple storage spaces are provided in the depth of a rack in the form of channels accessible from the front or the back of the rack. Channel vehicles, so called shuttles, are used to move goods within the channels. An exemplary channel storage system is described in WO 2009/132687 A1, for example. In channel storage systems, however, goods within a channel can only be stored and retrieved in a first-in first-out (FIFO) or last-in first-out (LIFO) manner and it is thus not possible to directly access goods at any desired storage space within a channel, such as in the middle of a full channel, for example.

Furthermore, EP 3 431 418 A1 relates to a shuttle for retrieving goods in a warehouse system. The shuttle has upper and lower platforms, wherein the upper platform holds one or more gripping arms for gripping goods and can be lifted relative to the lower platform to lift the goods. While such shuttle allows accessing goods in a storage space along a channel, it requires an empty space above the goods for moving and operating the upper and lower platforms.

It is thus an object of the present disclosure to provide warehouse system techniques that improve access to the goods in a warehouse system while enabling compact storage of the goods in the warehouse.

According to a first aspect of the present disclosure, a shuttle for a warehouse system is provided, wherein the warehouse system has an at least two-dimensional arrangement of storage spaces including at least one lane and at least one row. The lane(s) extend(s) in a longitudinal direction and the row(s) extend(s) in a transverse direction of the warehouse system. The warehouse system can also have a three-dimensional arrangement of storage spaces, including lanes, rows, and two or more levels in a vertical direction. In case of the three-dimensional structure, the warehouse system may also be called a cubic warehouse system.

From the viewpoint of the lanes, each of the lanes may provide storage spaces one after another in the longitudinal direction of the warehouse system, wherein the number of storage spaces per lane corresponds to the number of the rows. Similarly, from the viewpoint of the rows, each of the rows may provide storage spaces one after another in the transverse direction of the warehouse system, wherein the number of storage spaces per row corresponds to the number of the lanes. Even if there is only one lane or only one row, a certain number of storage spaces can be provided by the warehouse system. In other words, the warehouse system may provide a two-dimensional or three-dimensional matrix of storage spaces, wherein, at each intersection of the lanes and the rows (on one of the levels in the vertical direction), a storage space is formed. The longitudinal direction may correspond to a horizontal length of the warehouse system and the transverse direction may correspond to a horizontal width of the warehouse system.

The shuttle is configured to be movable along at least one of the lanes at a top of the at least one lane. For instance, the shuttle comprises rollers engageable in rails extending at the top of the at least one lane. Each of the rollers, once engaged in an associated rail, is capable of rolling (or gliding) along the rail, i.e., moving the shuttle at the top of the corresponding lane.

The shuttle comprises a vertical frame and a gripping arm coupled to the frame. The gripping arm is coupled to a portion of the frame arranged below at least one of the rollers. Furthermore, the gripping arm can be arranged at least partly below at least one of the rollers. The gripping arm is configured to lift the goods from one of the storage spaces when the shuttle is positioned above the goods, i.e., positioned above one of the storage spaces. The shuttle further comprises a lifting device arranged at the frame for lifting the gripping arm and the goods when the gripping arm grips the goods.

Since the gripping arm is coupled to the portion of the frame below the rollers and the lifting device for lifting the gripping arm and the goods is also arranged at the frame, e.g., at the portion of the frame below the rollers, a height of a portion of the shuttle that is to be arranged above the goods can be minimized. This allows a more compact warehouse system in the vertical direction, as either higher goods can be stored or less height is required for one level of the warehouse system.

The vertical frame of the shuttle further stabilizes the gripping arm, which is coupled to the vertical frame. Thus, a vibration and/or swinging of the gripping arm, particularly when lifting the goods, is reduced due to the more rigid structure including the vertical frame. This allows a smaller sized gripping arm, also providing a lightweight gripping arm.

When the shuttle moves in the longitudinal direction of the warehouse system, i.e., along a current lane, from one storage space to another using the rollers engaged in the rails, the vertical frame likewise moves along the current lane, in which the shuttle is located. At least the portion of the vertical frame can thereby pass a lateral side of goods stored in one of the storage spaces. For instance, if the shuttle is empty, i.e., the gripping arm currently does not lift any goods, at least the portion of the vertical frame arranged below the rollers can pass between lateral sides of adjacent goods stored in neighboring storage spaces, i.e., in storage spaces of the current lane as well as neighboring lane(s). Due to the high stability of the vertical frame providing a reduced swinging or vibrating of the vertical frame and/or the gripping arm, particularly during movement of the shuttle, the space between the adjacent goods can be kept small. Thus, the warehouse system can be more compact in a horizontal direction.

The shuttle can be driven to shift goods along the at least one lane in the longitudinal direction of the warehouse system. For instance, the shuttle can be driven along the rail extending at the top of the at least one lane using the rollers engageable in the rail. For driving purposes, the shuttle may comprise a driving device configured to drive the rollers to move the shuttle along the at least one lane. The driving device may be controlled by a control system of the warehouse system, e.g., through signals transmitted to the shuttle, e.g., via wireless transmission. The driving device may be an electric motor, for example, but may also be based on other drive technologies, such as magnetic drive technologies or linear motors or hydraulic/pneumatic drives, for example.

In a variant of the shuttle, the gripping arm can comprise a rod extending downwards from the frame, wherein the rod comprises a jaw at a lower end thereof, and wherein the rod is rotatable about a longitudinal axis of the rod so as to turn the jaw to grip the goods. For instance, the jaw may be configured to the placed (by rotation of the rod) under a portion of the goods, so that lifting the gripping arm by the lifting device allows lifting the goods from the storage space. As a mere example, the goods may be carried on a pallet or tray, and the jaw may be configured to be placed underneath a portion of the pallet or tray.

In a further variant of the shuttle, the lifting device can be arranged adjacent to the rod and can be configured to move the rod in a vertical direction along the longitudinal axis of the rod. Arranging the lifting device adjacent to the rod allows placing the lifting device in a region of the shuttle that is at least partially at the lateral side of the goods, so that the height of a shuttle region arranged above the goods can be reduced. Being arranged adjacent to the rod means that the lifting device is in close proximity to the rod and preferably in a plane defined by the longitudinal axis of the rod and the longitudinal axis of the warehouse system (i.e., the moving direction of the shuttle along a lane). This allows providing the lifting device and gripping arm in a compact manner. Both enable a more compact warehouse system.

The lifting device can be arranged in an area of the frame (directly) adjacent to the rod. For example, the lifting device and gripping arm can form a structural and/or mechanical unit arranged in a region of the shuttle below the rollers, such as the shuttle region arranged at the lateral side of the goods. The lifting device, for instance, can be arranged in a plane defined by the longitudinal axis of the rod the longitudinal axis of the warehouse system or at least close to this plane, so that a horizontal extension of lifting device and gripping arm can be kept to a minimum, particularly in a direction perpendicular to this plane, i.e., perpendicular to the lateral side of the goods. In other words, the thickness of the lateral shuttle region that is arranged between adjacent goods stored in neighboring storage spaces is reduced.

The lifting device may be an electrically drivable lifting jack, for example. When picking up the goods from the storage space, the shuttle may be configured to lift the goods to an extent that allows the goods to be shifted by the shuttle along the at least one lane above a bottom of the at least one lane. This extent may be a minimal distance that is sufficient to shift the goods along the at least one lane without contacting elements at the bottom of the at least one lane. When the goods are placed on a removable tray at the storage space (e.g., a removable tray placed on a car), the shuttle may be configured to lift the tray together with the goods. The goods may optionally be palletized. In this case the shuttle may be configured to lift the pallet together with the goods or lift the tray, pallet and goods.

While the lifting device can be arranged in front of or behind of the gripping arm (first arrangement) when viewed along the longitudinal direction of the warehouse system (i.e., the moving direction of the shuttle), the lifting device can also be arranged above the rod and/or on the longitudinal axis of the rod (second arrangement). The first arrangement allows a reduction of the height of the frame and, hence, a reduction of the height of the shuttle. For instance, such a shuttle can be employed in a warehouse system for the storage of goods of less height. On the other hand, the second arrangement allows an easy implementation of lifting device and gripping arm, since they can share a common longitudinal axis, particularly a common axis of their respective movement.

In another variant, according to the first arrangement, the shuttle can comprise a force deflector translating a force or movement induced by the lifting device into a movement of the rod along the longitudinal axis of the rod. For example, the lifting device may comprise an actuating component that moves in parallel to the longitudinal axis of the gripping arm, i.e., the longitudinal axis of the rod. The force deflector then can be implemented as a beam connecting the actuating component of the lifting device and the rod can be implemented as a gear configured for deflecting a coupling element, such as a chain or wire, between the lifting device and the rod, or the like. The beam can transfer the movement of the actuating component of the lifting device, so that actuating component and rod move in the same direction. The gear allows a change of the direction of the movement of the actuating component of the lifting device and the movement of the rod. This increases flexibility to the positioning of the lifting device at the frame and relative to the gripping arm. For instance, a gear allows the direction of movement of the lifting device to be at an angle to the longitudinal axis of the rod, such as 90°.

According to the second arrangement, the rod can be part of the lifting device, e.g., the gripping arm is integrated into the lifting device. For instance, the lifting device can include a piston, linear motor or the like, while the rod is an element of the lifting device moved by the piston, linear motor or the like. Although such arrangement may increase the overall height of the lifting device and gripping arm compared to the first arrangement, it still allows a compact unit of lifting device and gripping arm in a vertical direction of the shuttle.

In another variant, the lifting device can comprise an electric motor that rotates a shaft. The shaft rotation can be translated into a linear movement of the rod of the gripping arm via at least one gear, a rack and pinion arrangement, and/or the above beam or gear. On the other hand, the lifting device can comprise an electric linear motor, wherein the rod can form part of or an extension of the moving portion of the linear motor.

In yet another variant, the shuttle can further comprise an actuator configured to rotate the rod. For example, the actuator may be an electrical actuator, which is configured to rotate the rod to either grip or release the goods.

As a mere example, the actuator can be arranged adjacent to the rod and is coupled to the rod via a geared or toothed connection. For instance, a geared connection can be implemented as a gear unit comprising at least one gear, as a connection comprising a timing belt and at least one corresponding toothed pulley or sprocket arranged at the rod, or a combination thereof.

Alternatively, the actuator may include a rotating shaft that is directly coupled with the rod, so that a rotating movement of the actuator induces a corresponding rotation of the rod.

In another variant, the shuttle can further comprise a further gripping arm coupled to the portion of the frame and configured to lift the goods from one of the storage spaces when the shuttle is positioned above the goods. In other words, the further gripping arm is arranged in or close to the plane defined by the vertical frame. For instance, the further gripping arm may be arranged at a distance to the (first) gripping arm when viewed in the longitudinal direction of the warehouse system, i.e., the moving direction of the shuttle.

Furthermore, if the shuttle comprises at least two gripping arms, the actuator may be configured to rotate the rods of the at least two gripping arms simultaneously. In such a case, there may be no need for separate actuators for each gripping arm and, rather, all gripping arms may be served by the same actuator. This reduces the overall weight and complexity of the shuttle.

In a further variant, the shuttle can comprise a further lifting device arranged at the frame for lifting the further gripping arm and the goods when the further gripping arm grips the goods. For instance, the further lifting device and the further gripping arm can form a second structural unit for lifting the goods. This allows a more stable lifting of the goods at two positions of the lateral side of the goods. All variants and examples of the (first) lifting device and associated gripping arm can be applied to the further gripping arm and further lifting device.

In another variant, the shuttle can further comprise a gripping arm beam connecting the gripping arm with the further gripping arm. For example, the gripping arm beam can be arranged in a direction corresponding to the longitudinal direction of the warehouse system, i.e., the moving direction of the shuttle, and connects to corresponding portions of the gripping arms at respective sides of the gripping arm beam.

In this variant, the lifting device can be coupled to the gripping arm beam and is configured to lift the goods via the gripping arm and the further gripping arm. This not only reduces the weight of the shuttle, since only one lifting device for a plurality of gripping arms is required, but further facilitates compactness of the shuttle. Specifically, the lifting device can be arranged at the frame in an area between the gripping arm and the further gripping arm, which may not be occupied by any other component of the shuttle.

In yet another variant, the frame can comprise at least one vertical frame member extending substantially vertical and being at least partly below the at least one roller. In other words, at least a portion of the frame extends downwards below a roller and, hence, below the rails. Particularly the portion of the frame can extend downwards next to the goods stored in a storage space or lifted by the gripping arm.

As a mere example, the at least one vertical frame member can be adjustable in length, i.e., a height of the vertical frame can be adjusted. This allows adaptation of the same shuttle to different warehouse systems, or a warehouse system having levels of different height. For instance, in a three-dimensional warehouse system, levels of different height may be present, while the shuttle can be employed in each of the levels by adapting the height of the vertical frame to the respective level. The adaptation of the height of the frame can be implemented by providing at least one telescopic vertical frame member that can be adjusted in length by an associated controller, motor or the like.

In a further variant, the frame can comprise at least one horizontal frame member comprising at least one bearing for the gripping arm. Such bearing can be a sliding or gliding bearing for the gripping arm, e.g., for the rod. This reduces vibrating or swinging of the gripping arm, due to the coupling of the gripping arm to the horizontal frame member.

Furthermore, the lifting device can exemplarily be arranged at the at least one horizontal frame member. Thus, the frame itself carries the lifting device and the gripping arm, so that the shuttle can be manufactured in a compact manner. For example, the lifting device can be arranged in a manner overlapping with the horizontal frame member in a thickness direction of the frame (i.e., in a direction perpendicular to the plane that the frame spans).

In yet another variant, the shuttle can further comprise a further vertical frame having a gripping arm coupled to the further frame and a lifting device arranged at the further frame. In other words, the shuttle comprises at least two vertical frames, each having a gripping arm and associated lifting device.

Furthermore, the further vertical frame can be arranged in parallel to and at a distance to the vertical frame, while the distance spans the goods to be lifted. Thus, the vertical frame and the further vertical frame are arranged on opposite sides of the goods in one storage space. By lifting the goods with the gripping arm(s) of the vertical frame and the further vertical frame, a symmetric lifting and carrying of the goods is achieved.

In a further variant, the gripping arm can be coupled to a portion of the further vertical frame arranged below at least another one of the rollers. The other one of the rollers can be engaged with a different rail. For example, a first rail may be arranged above the storage spaces at or close to the lateral side of the storage space, while a second rail may be arranged above the storage spaces of the lane at or close to an opposite lateral side of the storage space. This allows provision of the vertical frame and further vertical frame on opposing sides of the storage space and moving the shuttle along the lane by the rollers and the rails.

In a further exemplary variant, the shuttle further comprises one or more beams connecting an upper member of the vertical frame with an upper member of the further vertical frame. Thus, the shuttle has a U-shaped form that is turned upside down. The space surrounded by the "U" is the space available for the goods to be lifted and transported along the lane by the shuttle. Since only the one or more beams run on top of the goods, the height of the shuttle in this region can be reduced and a compact shuttle can be achieved.

It is to be noted that the present disclosure also covers a shuttle having only one vertical frame that lifts goods from one lateral side of the goods. Such single vertical frame may be coupled to rollers engaged in at least two rails. For example, the shuttle can have an L-shaped form that provides stability with respect to a momentum induced by the goods into the vertical frame. The jaw(s) of the gripping arm(s), once moved into the gripping position underneath the goods, make the shuttle having a C-shaped form, such as the U-shaped form but turned by 90°.

In another variant, the shuttle can further comprise an electrical enclosure arranged at the portion of the vertical frame. The electrical enclosure can be mounted to one or more frame members of the vertical frame. This also avoids any large components to be arranged above the goods, contributing to the compactness of the shuttle.

For example, the electrical enclosure can be configured to hold a controller of the shuttle. Thus, an electrical (or electronic) controller of the shuttle can be arranged in a region of the shuttle that is positioned at the lateral side of the goods.

According to a second aspect of the present disclosure, a warehouse system comprises an at least two-dimensional arrangement of storage spaces including at least one lane and at least one row, wherein each storage space is configured to receive goods, and a shuttle according to the first aspect or one of its variants or examples.

For example, the goods can be placed on a removable tray at the storage space, and the shuttle can be configured to lift the tray together with the goods. This lifting of the tray can be achieved by the jaw(s) of the gripping arm(s) of the shuttle moving underneath the tray and by lifting the gripping arm(s) by the lifting device(s) of the shuttle. The shuttle can then move along the rails arranged at the top of the at least one lane, so that the goods can be transported to another row.

In a variant, the warehouse system can comprise one or more cars for carrying goods in at least one of the rows, wherein the one or more cars in a respective row are drivable along the respective row in the transverse direction, and wherein the number of the one or more cars in the respective row is less than the number of the plurality of lanes.

Each car may be dimensioned to fit into one storage space and a plurality of cars may be arranged one after another in both lane and row directions (i.e., one car per storage space). The one or more cars in a respective row may be arranged to be drivable (or, more generally, to be movable) along the row in the transverse direction. The number of cars arranged in each row may be less than the number of the plurality of lanes. In this way, it may be ensured that each row at any time comprises at least one free storage space (i.e., a storage space where no car is placed) which can be used to temporarily relocate the cars in the respective row in the transverse direction so that a path in a lane required by a shuttle to access a particular storage space in the longitudinal direction may be cleared. Each car may optionally comprise a removable tray on which the goods may be placed. Goods themselves may be palletized or are directly placed on the tray.

The at least one shuttle may pick up goods from a car in a respective lane and shift the goods along the lane as needed. In one variant, the at least one shuttle may comprise a warehouse-wide shuttle which may be relocated between different lanes as well as different levels of the warehouse system. In another variant, the at least one shuttle may comprise level-wide shuttles which may be relocated between different lanes on the same level, but not between different levels. In both variants, relocation of the shuttles in the transverse direction from one lane to another may be carried out through movement of the respective shuttle along a free row of the warehouse system in the transverse direction. The free row may be a dedicated row serving for the purpose of transferring shuttles in the transverse direction which may not be used for the storage of goods. Lifts, on the other hand, may be used to relocate a shuttle from one level to another. In still another variant, the at least one shuttle may comprise separate shuttles for each of the plurality of lanes. In this variant, shuttles do not need to be relocated at all and free rows for relocating the shuttles in the transverse direction may not be required.

When goods are to be retrieved by a shuttle from a particular storage space, it may happen that, in the lane of the particular storage space, other storage spaces may be occupied (by cars and/or goods) that prevent the shuttle from shifting the goods from the particular storage space to an end of the lane, where the goods may be transferred further in other directions as needed. In such a situation, the goods are to be retrieved from a storage space which is not an outermost occupied storage space in a lane. To gain access to the particular storage space for transfer of the goods by the shuttle, a path required to shift the goods by the shuttle from the particular storage space to the end of the lane must be cleared. The warehouse system may thus comprise a control system, such as a warehouse management computer, for example, which, in order to retrieve goods from a particular storage space, may be configured to drive the one or more cars in at least one of the plurality of rows to clear a path in the lane of the particular storage space enabling the at least one shuttle to shift the goods along the lane in the longitudinal direction from the particular storage space to an end of the lane, and drive the at least one shuttle to shift the goods along the cleared path from the particular storage space to the end of the lane.

Clearing the path in the lane of the particular storage space may be carried out in various ways. In one variant, clearing the path in the lane of the particular storage space may comprise driving, for each row from the end of the lane to (but not including) the particular storage space (i.e., including the row at the end of the lane, but excluding the row of the particular storage space), at least one car of the one or more cars in the respective row by at least one storage space in the transverse direction so that the lane of the particular storage space is cleared in the respective row. The cars in each row may be driven in the transverse direction in parallel so that the path in the lane of the particular storage space may be cleared in just a single driving step.

In a particular variant, among the plurality of lanes, a particular lane may be empty before clearing the path in the lane of the particular storage space, wherein driving the at least one car in the transverse direction shifts a particular car among the one or more cars in the respective row into the particular lane. The particular lane may be a dedicated lane used for temporary storage of cars until retrieving of goods from a particular storage space is complete. The particular lane may be an outermost lane of the warehouse system and the particular car may be an outermost car among the one or more cars in the respective row, for example. When retrieving is complete, the temporarily shifted cars may be shifted back as the cleared path is no longer needed.

In another variant, it is also conceivable that more than one lane among the plurality of lanes is empty for temporary storage of cars. Although this may result in non-optimal use of space in the warehouse system, it may increase throughput when a large number of goods is to be retrieved from the warehouse system simultaneously. Also, it will be understood that, rather than a particular lane which may be empty across all rows, it may be sufficient that each row has at least one empty storage space, while the empty storage spaces of the different rows may be available on different lanes. In this case, provided that cars can be driven independently from each other, shifted cars do not necessarily have to be shifted back to their initial position which may help to save energy.

It will be understood that, for the driving devices mentioned above, different drive technologies may be used. While electric motors may be one feasible variant, other technologies may be employed, such as magnetic drives including magnetic linear drives, for example. Also, it will be understood that control signals may not necessarily have to be communicated to the shuttles and/or cars via wireless transmission. Since, in the normal storage state, the cars in a row may be coupled to one another, wire bound transmission of control signals from one car to another may be conceivable as well. Wire based power supply may be realized in the same manner. The coupling between two adjacent cars may be implemented by a magnetic or a mechanical connection which may be released upon receipt of a corresponding uncoupling signal from the control system.

In the above description, reference to the plurality of lanes and the plurality of rows of the warehouse system was mainly made by referring to a single level of the warehouse system. It will be understood, however, that the storage spaces of the warehouse system may be organized into a plurality of levels in the vertical direction. In this case, the warehouse system may comprise at least one lift drivable to transfer goods from one of the plurality of levels to another one of the plurality of levels. When employing warehouse-wide shuttles, the at least one lift may also be usable to transfer the at least one shuttle from one level to another. In a further variant, the warehouse system may comprise at least two groups of lifts, wherein one of the at least two groups of lifts may exclusively be used for storing new goods in the warehouse system and another one of the at least two groups of lifts may exclusively be used for retrieving stored goods from the warehouse system. In such a variant, it is conceivable that one group of lifts is arranged at one side of the warehouse system (e.g., at a side at which new goods are fed into the warehouse system) and another group is arranged at another side of the warehouse system (e.g., at a side at which retrieved goods are fed out of the warehouse system). A group of lifts may comprise a plurality of lifts, but may also be made up of a single lift only. In this way, an efficient transfer of goods (or shuttles) between the levels of the warehouse system may be achieved.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

In the following, the present disclosure will further be described with reference to exemplary implementations illustrated in the figures, in which:
- Figure 1: illustrates a perspective view of an exemplary shuttle according to the present disclosure;
- Figure 2: illustrates both side views of the shuttle of Figure 1;
- Figure 3: illustrates a perspective view of another exemplary shuttle according to the present disclosure;
- Figure 4: illustrates both side views of the shuttle of Figure 3;
- Figure 5: illustrates both side views of another exemplary shuttle according to the present disclosure;
- Figure 6: illustrates a side view of yet another exemplary shuttle according to the present disclosure;
- Figure 7: illustrates a side view of a further exemplary shuttle according to the present disclosure; and
- Figure 8: illustrates a perspective view of a warehouse system comprising a three-dimensional arrangement of storage spaces according to the present disclosure.

In the following description, for purposes of explanation and not limitation, specific details are set forth in order to provide a thorough understanding of the present disclosure. It will be apparent to one skilled in the art that the present disclosure may be practiced in other implementations that depart from these specific details.

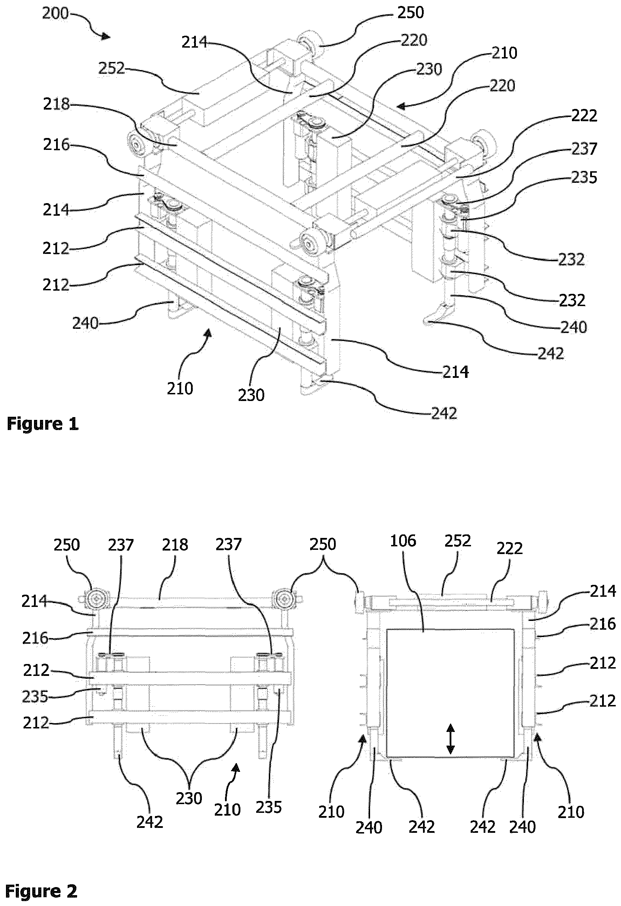

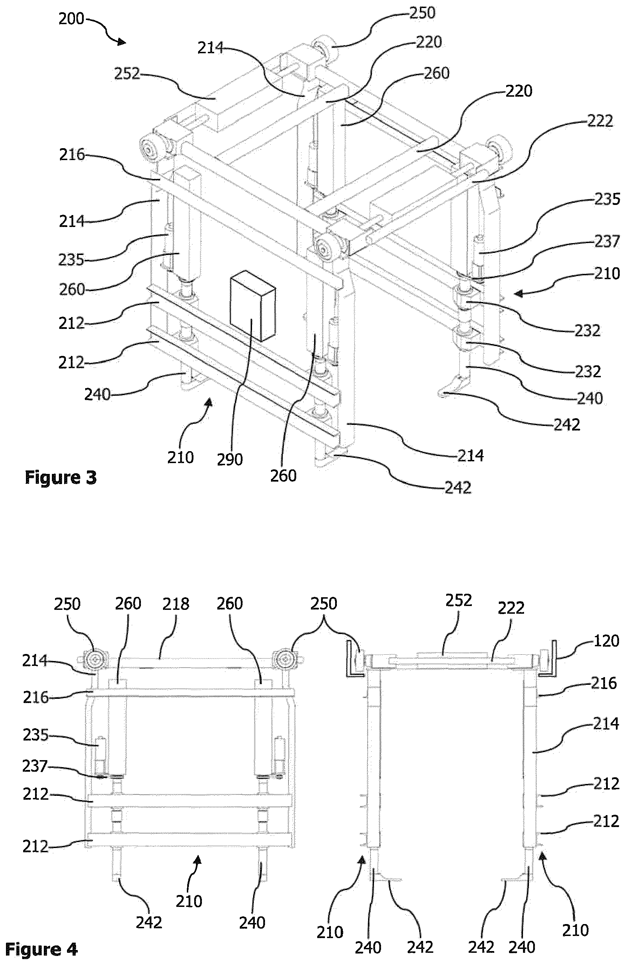

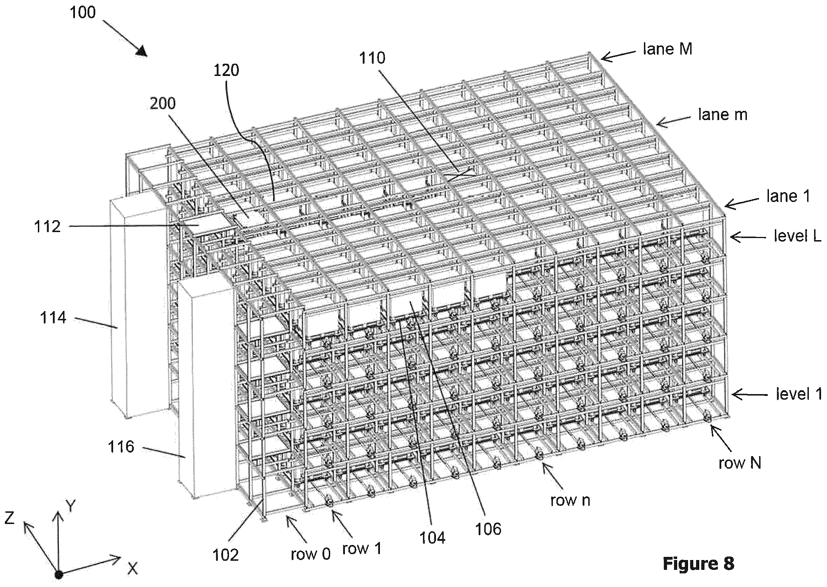

Figure 1 illustrates a perspective view of an exemplary shuttle 200 for retrieving goods 106 in a warehouse system 100 (see particularly Figure 8). The shuttle 200 comprises rollers 250, particularly four rollers 250 arranged at four corners of an upper region of the shuttle 200. The rollers 250 can be engaged in rails 120 (cf. Figure 4) extending at the top of at least one lane in the warehouse system 100.

The shuttle 200 further comprises a vertical frame 210. In the exemplary shuttle 200, the frame 210 comprises two vertical frame members 214 extending substantially vertically and at least partially below at least one of the rollers 250. The frame 210 further comprises at least one horizontal frame member 212, 216. Figure 1 shows three horizontal frame members 212, 216 and two vertical frame members 214. This vertical frame forms a lateral side of the shuttle 200.

As can be seen from the illustrated shuttle 200, it comprises a further vertical frame 210 that is arranged in parallel to and at a distance from the first vertical frame 210. The distance between both vertical frames 210 spans the goods 106 to be lifted and transported by the shuttle 200. In other words, the frames 210 define a transporting space that is the (e.g., maximum) width of the goods 106 or the (e.g., maximum) width of a storage space 110 available for the storage of goods 106.

The shuttle 200 may have a substantially U-shaped form that is upside down. This form is further achieved by one or more beams 220, 222 connecting an upper member 218 of the vertical frame 210. It is to be noted that upper member 218 may be considered as forming part of a horizontal frame arranged at a top region of the shuttle 200, to which each of the vertical frames 210 is coupled. Thus, the upper member 218 does not necessarily form part of the vertical frame 210.

In any case, arranged at each of the vertical frames 210 is a gripping arm 240, 242 that is coupled to a portion of the frame 210 arranged below at least one of the rollers 250. The gripping arm 240, 242 is configured to lift the goods 106 from one of the storage spaces 110 when the shuttle 200 is positioned above the goods 106. For this lifting, the gripping arm comprises a rod 240 extending downwards from the frame 210 and a jaw 242 at a lower end of the rod 240.

The jaw 242 is configured to grip the goods 106, i.e., to be placed underneath the goods 106 to carry the goods 106. The rod 240 is rotatable about a longitudinal axis of the rod 240 so as to turn the jaw 242 to grip the goods 106. This rotating movement may be achieved by an actuator 235 (see also Figure 2). Each of Figures 1 and 2 show the jaw 242 rotated into a position for gripping (being underneath) the goods 106. The jaw 242 (and rod 240) can be rotated by up to 90°, so that the jaw 240 leaves the gripping position and turns towards the plane defined by the frame 210, i.e., moving out of the space underneath the goods 106. The actuator 235 can be arranged adjacent to the rod 240, such as at the lateral side of the rod 240. A geared connection 237, such as a gear unit or timing belt connection, may be arranged between the actuator 235 and the rod 240, in order to transfer an actuating movement of the actuator 235 to the rod 240 thereby rotating the rod 240 and jaw 242. This saves height of the rod 240 and actuator 235, in order to provide a compact shuttle 200.

The actual lifting of the goods 106 and movement of the rod 240 in a longitudinal direction of the rod 240 (see double arrow in Figure 2) is achieved by a lifting device 230 arranged at the frame 210. The longitudinal direction of the rod 240, i.e., the moving or lifting direction of the gripping arm, is preferably a vertical direction. Furthermore, one lifting device 230 can be provided for each rod 240 at each of the frames 210 as illustrated in Figures 1 and 2. Also, in order to minimize a height of the shuttle 200, the lifting device 230 is arranged adjacent to the rod 240, particularly to the left or right of the rod 240 when viewing at the shuttle 200 perpendicularly to a plane defined by the vertical frame 210 (see particularly Figure 2 left side view).

The lifting device 230 can be an electric motor, a magnetic motor, a compressor, a pump or the like for a hydraulic or pneumatic component. Accordingly, the rod 240 can be a rigid rod 240 driven by the electric motor or magnetic motor, or can be a telescopic rod 240 driven by a hydraulic or pneumatic fluid provided by the compressor or pump. In case of an electric or magnetic motor, the rod 240 may be driven via a rack and pinion arrangement or the rod 240 may have a threaded surface, while the lifting device 230 drives a nut or worm wheel (not illustrated) engaged with the threaded surface. The rod 240 may also form the moving component of a linear motor implemented by the lifting device 230.

The shuttle 200 as illustrated in Figures 1 and 2 is equipped with two gripping arms 240, 242 at each frame 210, i.e., is equipped with a total of four gripping arms 240, 242. This allows a symmetric lifting and placing of the goods 106 from and at a storage space 110. All components for lifting the goods 106 as well as rotating the rod 240 are arranged at the respective frame 210, particularly a portion of the respective frame 210 arranged below at least one of the rollers 250. This frees the space in the upper region of the shuttle 200, particularly the region occupied by the rollers 250 as well as the horizontal frame consisting of beams 220, 222 and upper member 218. For example, the vertical frame member 214 and/or the horizontal frame members 212, 216 may define a space in a width direction of the frame 210 (the width direction is best seen in the right side view of Figure 2) that can be used to arrange the lifting device(s) 230, the gripping arm(s) 240, 242 and the actuator 235.

This frame structure provides a high stability of the components actually lifting the goods 106. For instance, the frame 210 can comprise at least one bearing 232 for a gripping arm 240. A bearing 232 may be arranged (or integrated into) a horizontal frame member 212. Such bearing 232, e.g., a gliding or sliding bearing, facilitates movement of the rod 240 along its longitudinal direction induced by the lifting device 230 and stabilizes the rod 240. The bearing 232 hinders the rod 240 from swinging during movement of the shuttle 200 and at least reduces deforming of the rod 240 under the weight of the goods 106. Thus, additional stability for transporting the goods 106 is achieved.

In order to drive the shuttle 200 along a lane in the warehouse system 100, such as along a rail 120, the rollers 250 may be coupled to a driving device 252. Such driving device 252 can be an electric motor or a magnetic component configured to drive (rotate) the rollers 250. The shuttle 200 may comprise a single driving device 252 driving at least one roller 250, may comprise a driving device 252 for a pair of rollers 250 (as illustrated in Figure 1), or may comprise one driving device 252 for each roller 250.

Figures 3 and 4 illustrates another exemplary shuttle 200, which is similar to the shuttle 200 of Figures 1 and 2. Components and elements of the illustrated exemplary shuttle 200 having the same function or which are identical in the shuttle 200 of each of Figures 1 to 4 are indicated by the same reference numeral. If it is the same component or element, an explanation thereof is omitted in the following.

The shuttle 200 of Figures 3 and 4 is higher than the shuttle 200 of Figures 1 and 2. For instance, if the height of the storage spaces 110 increases, higher shuttles 200 may have to be employed. Such shuttle 200 also comprises rollers 250, at least one vertical frame 210, at least one gripping arm 240, 242 and at least one lifting device 260.

As can be seen from a comparison of Figures 1 and 3, the lifting device 260 is arranged above the rod 240. The lifting device 260 actually shares a common longitudinal axis with the rod 240. This arrangement allows a linear movement provided by the lifting device 260 to be directly transferred to the rod 240. For instance, such arrangement of the lifting device 260 is preferable if the lifting device 260 is implemented as a linear motor or a threaded rod 240 engaged in a nut driven by the lifting device 260.

Likewise, the lifting device 260 may include a piston (not illustrated) movable in a direction parallel to the longitudinal axis of the rod 240, while the rod 240 is (e.g., directly) coupled to the piston or even forms part of the piston. In other words, the lifting device 260 and the rod 240, i.e., the gripping arm, can be integrated into one another.

Another difference of the shuttle 200 of Figures 3 and 4 over the shuttle 200 of Figures 1 and 2 is the arrangement of the actuator 235 adjacent to the lifting device 260. This further allows an integration of the actuator 235 into the lifting device 260. In other words, a single device may be provided that is configured to move the rod 240 along its longitudinal axis (along the vertical direction) and to also rotate the rod 240 and the jaw 242 between the gripping position underneath the goods 106 and a release position, such as underneath the frame 210.

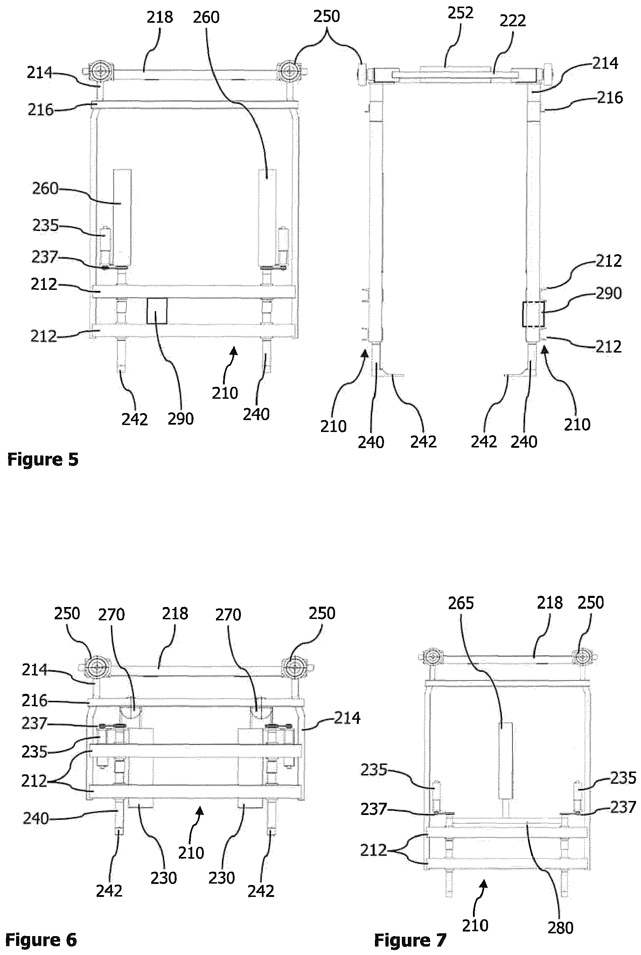

Any of the exemplary shuttles 200 can be equipped with an electrical enclosure 290 (which is only illustrated in Figures 3 and 5 for clarity reasons). The electrical enclosure 290 can house (or accommodate) a controller of the shuttle 200, a communication module or another component required for controlling the shuttle 200 or any of its elements, such as the lifting device 230, 260, the actuator 235 and/or the driving device 252. The electrical enclosure 290 can, for example, be coupled to a horizontal frame member 212, so that the enclosure 290 is arranged in a free space inside of the frame 210. The shuttle 200 can comprise a single enclosure 290 as illustrated or can comprise an enclosure 290 in each of the frames 210.

Figure 4 additionally illustrates exemplary rails 120. It is to be understood that any type of rail 120 may be employed, in which rollers 250 can engage and roll, so that the shuttle 200 can move along a lane over the storage spaces 110 of this lane. Of course, any of the shuttles depicted in Figures 1 to 7 may roll along such rails 120, which are only illustrated in Figure 4 in order to reduce complexity of the other drawings.

Figure 5 illustrates another exemplary shuttle 200, which has an even larger extension/height compared to the exemplary shuttles of Figures 1 to 4. Thus, a shuttle 200 can be designed for the height of each storage space 110 of a particular warehouse system 100.

Moreover, the vertical frame member(s) 214 may be adjustable in length. For instance, the vertical frame member(s) 214 can at least include a telescopic portion (not illustrated). This allows adaptation of the shuttle 200 to the height of a level of the warehouse system 100. For instance, the warehouse system 100 may include levels of different height, while the shuttle 200 can be moved between levels and can be used in each of the levels. The adaptation of the height of the shuttle 200 may be implemented by an actuator or extending device (e.g., a hydraulic or pneumatic telescope), which are not illustrated. Thus, the adaptation of the height may be performed anytime while using the shuttle 200, preferably at a time where no goods 106 are lifted by the shuttle 200.

Figure 5 further illustrates another position of the electrical enclosure 290, such as between two horizontal frame members 212. Since the space between two such horizontal frame members 212 is usually not occupied, the electrical enclosure 290 can be mounted in a very space-saving manner. Preferably, the thickness of the electrical enclosure 290 (cf. right side view in Figure 5) corresponds to the thickness of the frame 210 or does not significantly exceed this thickness.

The electrical enclosure 290 can house any controlling device or communication module (not illustrated) for receiving and transmitting signals from and to the warehouse system 100. For instance, the driving device 252, the lifting device 230, 260, 265 and/or the actuator 235 of the shuttle 200 may be controlled by a control system of the warehouse system 100, e.g., through signals transmitted to the shuttle 200 via wireless transmission.

Figure 6 illustrates an exemplary shuttle 200 that is of rather small height, as the shuttle 200 of Figures 1 and 2. This shuttle 200 differs by comprising a force deflector 270 translating a force or movement induced by the lifting device 230 into a movement of the rod 240 along the longitudinal axis of the rod 240. The force deflector 270 may be any mechanical coupling between the lifting device 230 and rod 240 that changes a movement of direction between the side of the lifting device 230 and the side of the rod 240. The force deflector 270 can be mounted at a horizontal frame member 216.

For instance, the lifting device 230 can induce a force or movement in a vertical direction at a top of the lifting device 230 (in Figure 6), while the rod 240 requires a movement in an opposite direction. Thus, if the lifting device 230 provides a movement in an upward direction, the rod 240 is pushed downwards. This can be achieved by coupling the lifting device 230 with the rod 240 via the force deflector 270. As a mere example, the force deflector 270 can be a rocker lever. Alternatively, the force deflector 270 can be a wheel (as illustrated in Figure 6) over which a chain or similar component is placed that is capable of transferring pushing and pulling forces.

Moreover, force deflectors 270 further allow providing only one lifting device 230 that operates both rods 240. For example, the lifting device 230 can be arranged at the frame 210 in a horizontal manner and has actuating components at each horizontal side of the lifting device 230, each coupled to a respective rod via a respective force deflector 270.

Figure 7 illustrates another exemplary shuttle 200 that comprises a gripping arm beam 280 connecting two gripping arms 240, 242 (of the same frame 210). For instance, the gripping arm beam 280 may be arranged in a plane defined by the vertical frame 210, so that it does not add to the thickness of the frame 210. Such gripping arm beam 280 allows a single lifting device 265 to be employed for lifting the goods 106 via the gripping arms 240, 242.

Figure 8 illustrates a perspective view of an exemplary warehouse system 100 which comprises a three-dimensional arrangement of storage spaces 110 including a plurality of lanes (lane 1 to lane M) extending in a longitudinal direction X, a plurality of rows (row 1 to row N) extending in a transverse direction Z, and one or more levels (level 1 to level L) in a vertical direction Y of the warehouse system 100. The warehouse system 100 is formed by a rack frame structure 102 and, due to its three-dimensional structure, the warehouse system 100 may also be called a cubic warehouse system. In Figure 8, the number of lanes is denoted by M, the number of rows is denoted by N, and the number of levels is denoted by L. From the viewpoint of the lanes, each of the lanes provides storage spaces one after another in the longitudinal direction X, beginning at row 1 and ending at row N. Similarly, from the viewpoint of the rows, each of the rows provides storage spaces one after another in the transverse direction Z, beginning at lane 1 and ending at lane M. The plurality of levels ranges from level 1 to level L.

In order to store goods at the storage spaces 110 of the warehouse system 100, cars 104 for carrying goods 106 (see also Figure 2) may be employed in each row. Each car 104 may be dimensioned to fit into one storage space and a plurality of cars 104 may be arranged one after another in both lane and row directions (i.e., one car per storage space). The cars 104 in a row are drivable along the row in the transverse direction Z. In the example of Figure 8, the number of cars 104 arranged in each row is exactly one less than the number of lanes M. In this way, it is ensured that each row at any time comprises at least one free storage space (i.e., a storage space where no car is placed) which can be used to temporarily relocate the cars 104 in a respective row in the transverse direction Z so that a path in a lane required by a shuttle 200 to access a particular storage space in the longitudinal direction X may be cleared. Such situation is shown in the example of Figure 8 at level L, where a shuttle 200 is ready to be driven along lane m in the longitudinal direction X to pick up goods from a particular storage space 110 (indicated by a cross "X" in the drawing). On levels 1 to L-1, on the other hand, all cars 104 are in a normal storage state, i.e., all cars 104 are carrying goods 106 and are parked in the storage spaces in rows 1 to N of lanes 2 to M. A normal storage state of a level may be said to be a state in which lane 1 is empty on that level. Lane 1 may thus be used as temporary storage space for those rows in which a path needs to be cleared, as explained above.

In Figure 8, only one shuttle 200 is visible. The shuttle 200 may be a warehouse-wide shuttle which may be relocated between different lanes as well as different levels of the warehouse system 100. Relocation of the shuttle 200 in the transverse direction Z from one lane to another may be carried out through a temporary movement along row 0 which serves for the purpose of transferring shuttles in the transverse direction Z and which may not be used for storing goods. A transfer of the shuttle 200 in row 0 from one lane to another may be carried out using a docking station 112. The docking station 112 may be used to transfer the shuttle 200 to one of the lifts 114 and 116 (indicated schematically only) as well which, in turn, may be driven to transfer the shuttle 200 to other levels. As may be seen in Figure 8, docking stations 112 are also provided on other levels in row 0 to transfer shuttles on these levels in the transverse direction Z in an equivalent manner. In another variant, the shuttle 200 may be a level-wide shuttle (e.g., the warehouse system 100 may comprise one or more shuttles per level) which may be relocated between different lanes on the same level, as described above, but not between different levels. In still another variant, the warehouse system 100 may comprise separate shuttles 200 for each of the plurality of lanes. In such a variant, relocation of shuttles between different lanes via row 0 may not be required at all. Goods 106 could then be transferred at the end of the lanes (i.e., at row 1) to stacker cranes, for example. Thus, in such a case, row 0 and the lifts 114 and 116 may not be needed at all. In the example of Figure 8, for an efficient transfer between levels in the warehouse system 100, one of the lifts 114 and 116 may exclusively be used for storing new goods in the warehouse system 100 and the other one of the lifts 114 and 116 may exclusively be used for retrieving stored goods from the warehouse system 100.

The shuttle(s) 200 can move along a lane by having their rollers 250 engaged in corresponding rails 120 arranged at a top of the storage spaces 110 and in the longitudinal direction X of the warehouse system 100.

As has become apparent from the above, the present disclosure provides techniques for automated warehouse systems which enable direct access to any desired storage space provided in the warehouse systems. The capability of accessing any goods at any time makes it possible to implement warehouse systems as single three-dimensional racks systems that utilize the space available in a warehouse efficiently. Spaces between opposing rack fronts required for stacker cranes that supply opposing racks with goods may thus no longer be needed. Compact warehouse systems with improved space savings and improved accessibility of goods may thus be achieved.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A shuttle (200) for retrieving goods (106) in a warehouse system (100) comprising an at least two-dimensional arrangement of storage spaces (110) including at least one lane and at least one row, the shuttle (200) being configured to be movable along at least one of the lanes at a top of the at least one lane, the shuttle (200) comprising:
rollers (250) engageable in rails (120) extending at the top of the at least one lane;
a vertical frame (210);
a gripping arm (240, 242) coupled to a portion of the frame (210) arranged below at least one of the rollers (250), wherein the gripping arm (240, 242) is configured to lift the goods (106) from one of the storage spaces (110) when the shuttle (200) is positioned above the goods (106); and
a lifting device (230, 260, 265) arranged at the frame (210) for lifting the gripping arm (240, 242) and the goods (106) when the gripping arm (240, 242) grips the goods (106).

2. The shuttle (200) according to claim 1, wherein the gripping arm (240, 242) comprises a rod (240) extending downwards from the frame (210), wherein the rod (240) comprises a jaw (242) at a lower end thereof, and wherein the rod (240) is rotatable about a longitudinal axis of the rod (240) so as to turn the jaw (242) to grip the goods (106).

3. The shuttle (200) according to claim 2, wherein the lifting device (230, 260, 265) is arranged adjacent to the rod (240) and is configured to move the rod (240) in a vertical direction along the longitudinal axis of the rod (240).

4. The shuttle (200) according to claim 2 or 3, wherein the lifting device (260, 265) is arranged above the rod (240) and/or on the longitudinal axis of the rod (240).

5. The shuttle (200) according to one of claims 2 to 4, further comprising:
a force deflector (270) translating a force or movement induced by the lifting device (230) into a movement of the rod (240) along the longitudinal axis of the rod (240), or
wherein the rod (240) is part of the lifting device (230, 260).

6. The shuttle (200) according to one of claims 2 to 5, further comprising:
an actuator (235) configured to rotate the rod (240),
wherein preferably the actuator (235) is arranged adjacent to the rod (240) and is coupled to the rod (240) via a geared or toothed connection (237).

7. The shuttle (200) according to one of claims 1 to 6, further comprising:
a further gripping arm (240, 242) coupled to the portion of the frame (210) and configured to lift the goods (106) from one of the storage spaces (110) when the shuttle (200) is positioned above the goods (106).

8. The shuttle (200) according to claim 7, further comprising:
a further lifting device (230, 260, 265) arranged at the frame (210) for lifting the further gripping arm (240, 242) and the goods (106) when the further gripping arm (240, 242) grips the goods (106).

9. The shuttle (200) according to claim 7, further comprising:
a gripping arm beam (280) connecting the gripping arm (240, 242) with the further gripping arm (240, 242),
wherein the lifting device (265) is coupled to the gripping arm beam (280) and is configured to lift the goods (106) via the gripping arm (240, 242) and the further gripping arm (240, 242).

10. The shuttle (200) according to one of claims 1 to 9, wherein the frame (210) comprises at least one vertical frame member (214) extending substantially vertical and being at least partly below the at least one roller (250),
wherein preferably the at least one vertical frame member (214) is adjustable in length.

11. The shuttle (200) according to one of claims 1 to 10, wherein the frame (210) comprises at least one horizontal frame member (212) comprising at least one bearing (232) for the gripping arm (240),
wherein preferably the lifting device (230, 260, 265) is arranged at the at least one horizontal frame member (212).

12. The shuttle (200) according to one of claims 1 to 11, further comprising:
a further vertical frame (210) having a gripping arm (240, 242) coupled to the further frame (210), and a lifting device (230, 260, 265) arranged at the further frame (210),
wherein the further vertical frame (210) is arranged in parallel to and at a distance to the vertical frame (210), the distance spanning the goods to be lifted, and
wherein preferably the gripping arm (240, 242) is coupled to a portion of the further vertical frame (210) arranged below at least another one of the rollers (250).

13. The shuttle (200) according to claim 12, further comprising:
one or more beams (220, 222) connecting an upper member (218) of the vertical frame (210) with an upper member (218) of the further vertical frame (210).

14. The shuttle (200) according to one of claims 1 to 13, further comprising:
an electrical enclosure (290) arranged at the portion of the vertical frame (210),
wherein preferably the electrical enclosure (290) is configured to hold a controller of the shuttle (200).

15. A warehouse system (100), comprising:
an at least two-dimensional arrangement of storage spaces (110) including at least one lane and at least one row, wherein each storage space (110) is configured to receive goods (106); and
a shuttle (200) according to one of claims 1 to 14,
wherein preferably the goods (106) are placed on a removable tray (104) at the storage space (110), and the shuttle (200) is configured to lift the tray (104) together with the goods (106).
